# EUROPEAN PATENT APPLICATION

(11) **EP 2 767 425 A2**
(43) Date of publication of application: **20.08.2014**
(21) Application number: 14155055.8
(22) Date of filing: 13.02.2014
(51) Int. Cl.: B60J 11/06, B60J 11/08

(54) **Protective covering for caravan**

(30) Priority: 14.02.2013 GB 201302618
(71) Applicant: Specialised Covers, Shipley, West Yorkshire BD17 7AD (GB)
(72) Inventor: Long, Elliot, North Yorkshire LS17 0AN (GB)
(74) Representative: Coombes, Catherine Ann

(57) **Abstract**

The present invention relates to an integral one-piece tow protector for a caravan, wherein said tow protector (1) is adjustable to fit more than one make of caravan and wherein said tow protector (1) is formed from a material or material which protect the caravan from debris during travel; caravans comprising said tow protector and methods of erecting said tow protector.

## Description

### FIELD OF THE INVENTION

The present invention relates to a universal tow-protector for a caravan.

### BACKGROUND

Debris (e.g. small stones, insects, dirt and exhaust fumes and the like) contacting a caravan whilst it is being towed can have deleterious effects on a caravan. The costs of replacing cracked windows or stone chips on a caravan are quite expensive. Furthermore, aluminium caravans are easily dented and dents can reduce the resale value. Dirt and other debris can also affect the aesthetic appeal of the caravan.

For these and other reasons, it is desirable to protect a caravan from debris whilst it is being towed.

Some tow-protectors for caravans are known. Known tow-protectors fall can be seen to fall into two categories. Firstly, there exists tailor-made tow protectors which are designed to fit one make/model of caravan. Secondly, there exists adjustable tow protectors which can be used with multiple makes and models of caravan.

Known adjustable tow protectors come as a kit comprising many parts. For example, 3 or 5 fabric pieces make up the body of the tow protector. However, such multi-piece tow protectors may be problematical to erect into a tow protector on a caravan as various piece may move out of position as other pieces are being attached. Thus, such tow-protectors may be seen as cumbersome and fiddly to consumers, correct attachment of such tow-protectors may be time consuming and may require more than one person to erect the tow-protector.

Accordingly, there exists a need for an easier design of tow protector which overcomes some of these issues whilst still having the flexibility of adjustment which allows a tow-protector to be used on various different types of caravan.

### SUMMARY OF THE INVENTION

The present invention relates to an integral one-piece tow protector for a caravan, wherein said tow protector is adjustable to fit more than one make of caravan and wherein said tow protector is formed from a material or material which protects the caravan from debris during travel.

Suitably, the tow protector may comprise a main body and two wings, each wing integral with the main body along the wing's outermost side; wherein one or more of the other sides which define the wing forms a closeable slit with the main body to provide adjustment means about the lower portion of the tow protector.

Suitably, the tow-protector may additionally or alternatively comprise a means to secure one or more vertical folds in the main body to provide means for adjustment in width.

Suitably, the tow protector may have one or more (preferably two or more or preferably two) vertical flaps which extend along the length of the tow protector. Suitably, each of the flap(s) may have a plurality of adjustable straps along the length of the flap, which in use connect with the outermost sides of the tow protector to provide a means of securing the tow protector at a desired width.

Suitably, the integral one-piece tow protector comprises one or more reflective strips. For example, the visible side of the flap(s) in use may house a reflective strip. Additionally or alternatively, the underside of the flap(s) in use may comprise Velcro.

Suitably, awning tape may define the outermost sides of the tow protector.

Suitably, the tow protector may comprise a stretchable fabric approximately midway along the bottom edge of the tow protector to allow flexibility about the A-frame of a caravan in use.

Suitably, at least a portion (preferably all) of the underside of the main body of the tow-protector may have a surface comprising a fleece material.

Suitably, at least a portion (preferably all) of the outerside of the main body of the tow-protector may have a surface comprising a water repellent or water resistant material.

Suitably, the main body of the tow protector may comprise pockets (e.g. two pockets) to house lights; and/or means for forming one or more apertures in the tow protector (for example at positions corresponding to lights on the caravan when the tow protector is erected on a caravan). Suitably, such pockets (if used) may be transparent and of a material flexible enough to allow push operation of the LED lights.

Suitably, the tow protector of the present invention may cooperate with caravans having two awning channels.

Suitably, the tow protector of the present invention may have one or more zips which extend the length of tow protector. Suitably, the two protector may have a zip which extends the length of the tow protector situated on one or each side of the tow protector (e.g. within the vicinity of the one or more side edges. Advantageously, this maid aid assembly of the tow protector onto the caravan.

The present invention further provides a caravan comprising an integral one-piece tow protector in accordance with the present invention.

In another aspect, the present invention provides a method of erecting an integral one-piece tow protector of the present invention; said method comprising:
sliding the side edges of the two-protector into the awning channels of a caravan and
tightening the tow protector.

### BRIEF DESCRIPTION OF THE DRAWINGS

**Figure 1** is a diagram of a tow protector in accordance with the present invention.
**Figure 2** shows a cross-section of a flap on a tow protector of Figure 1.
**Figure 3** shows a cross-section of the outermost edge of the tow protector of Figure 1.
**Figure 4** is a perspective view of a tow-protector made in accordance with the diagram of Figure 1
**Figure 5** shows the tow-protector of Figure 4 in use on a Pageant caravan.
**Figures 6** shows the tow-protector of Figure 4 in use on a Sprite caravan.

### DESCRIPTION

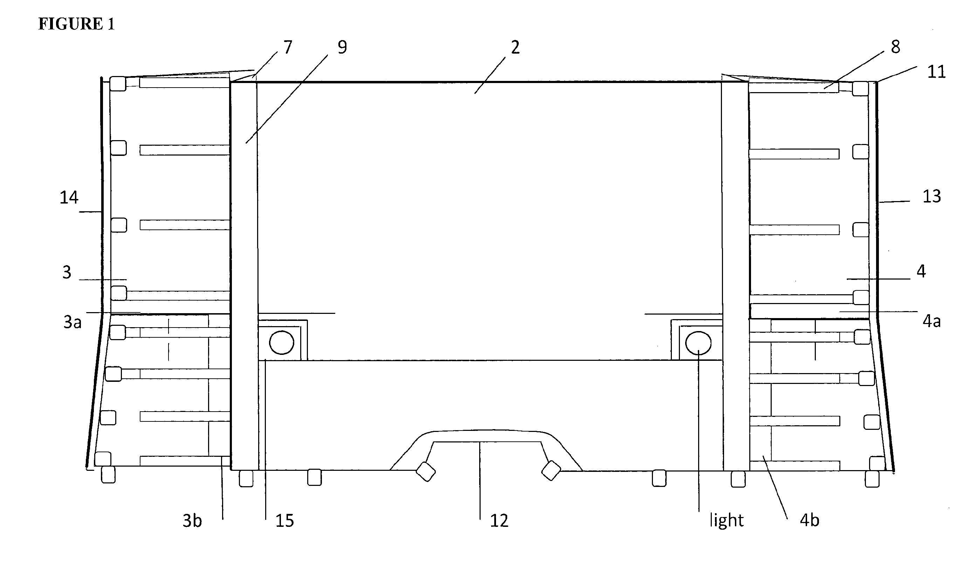

**Figure 1** shows a diagram of a tow protector **1** in accordance with the present invention. The tow protector may comprise a main body **2** and two wings **3,4,** each wing integral with the main body along the wing's outermost side **13, 14;** wherein one or more of the other sides which define the wing **(3a/4a and/or 3b,4b)** forms a closeable slit with the main body to provide adjustment means about the lower portion of the tow protector. As can be seen, the main body **2** may constitute a substantially T- shape with the wings **3,4** on either lower side of the stem of the T to form a substantially rectangular shape when the tow protector is laid flat.

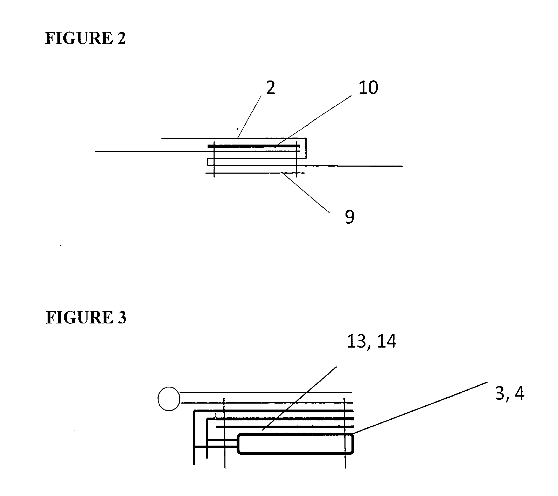

The wings **3,4** are attached to the main body along the outer edges **13,14** of the tow protector. An example of one possible configuration at these edges **13, 14** is shown in Figure 3. Advantageously, by making the wings **13, 14** integral with the main body **2** about the outer edges **13, 14** allows for easier erection of the tow protector on a caravan as each edge **13,14** is simply slid into the awning channel on with side of the front of the caravan.

One or more of the other sides which define the wing **(3a/4a and/or 3b,4b)** forms a closeable slit with the main body **2.** Any means of fastening about one or more of these sides may be employed. For example, the use of Velcro may be used as illustrated. Each wing is of a size which enables some form of overlap between the sides **(3a/4a and/or 3b,4b)** of the wings and the corresponding sides of the main body. Advantageously, by using Velcro or the like, the wings can be attached to the main body in variable positions to allow flexibility for different contours of caravan. Thus, the tow protector of the present invention may more readily adapt to different caravans without billowing out.

The tow-protector may additionally or alternatively comprise a means to secure one or more vertical folds in the main body to provide means for adjustment in width. A skilled person would be readily aware of various ways of doing this using e.g. straps and/or Velcro.

As shown in Figure 1 the tow protector of the present invention may have one or more flaps 7. The flaps are advantageous to provide an easy way of creating a fold along the length of the tow protector. Furthermore, when used in co-operation with one or more adjustable straps **8** between the flap(s) **7** and an outer edge **13, 14** an efficient ease of use means to adjust the width of the tow-protector on the caravan is achieved.

The one or more flap(s) **7** when used may have on the visible side of the flap(s) in use a reflective strip **9.** However, reflective strips (if used) could be placed anywhere visible on the tow protector. On the underside of any flap(s) used it is advantageous to have Velcro. The use of Velcro may enable the flap to lay flat and position any fold in the tow protector prior to the connection of any straps **8** (where used). This may also advantageously aid in getting the tow protector adapted to the contours of a particular caravan in an aesthetically pleasing way as well as in contributing to the prevention of billowing of the tow protector in use. One preferred construction of a flap **7** is shown in Figure 2.

The tow-protector may have one or more adjustable straps **8** which may extend along a portion of the tow protector or across the entire width of the tow protector. The purpose of the straps (if used) is to provide an ability to adjust the proportions of the tow protector to fit the contours of the caravan. A person of ordinary skill in the art is readily aware of various ways to position adjustable straps to achieve this aim. Suitably, a tow protector in accordance with the present invention may comprise any suitable number of adjustable straps. For example, the tow protector may comprise one or more; or two or more; or three or more; or five or more straps

In one preferable embodiment; a two protector comprises at least one adjustable strap **8** per flap **7** with the adjustable strap working in cooperation with the flap to aid the tightening of a crease or fold.

As shown in the illustrative and preferred embodiment of Figure 1, each flap **7** has a plurality of straps **8** along the length of the flap **7.** The adjustable straps can be secured to the edges **13, 14** of the tow protector. Advantageously, a plurality of straps along the length of the tow protector allows each strap to be tightened individually so that the tow protector can adapt to various contours of caravans.

Different caravans have different sized A frames. When a two protector ill fits around the A frame thee is a risk that debris and /or air may get under the tow protector increasing the risk of billowing and/or negating the effects of the tow protector.

Thus, preferably, the tow protector comprises some flexibility for adapting the tow protector around various sizes of A frame. Preferably, a portion of the tow protector which in use is near to or partially surrounds the A frame is made of a stretchable material to provide some flexibility about the A frame. One suitable configuration of stretchable material **12** is shown in Figure 1.

Suitably, at least a portion (preferably all) of the underside (not shown) of the main body of the tow-protector has a surface comprising a fleece material. Advantageously, this increases the protective thickness of the material and provides a non-scratch surface.

Suitably, at least a portion (preferably all) of the outer side of the tow-protector has a surface comprising a water repellent or water resistant material. However, any configuration where the tow protector prevents water seeping through to the surface area of the caravan protected by the tow protector is encompassed. For example, the water repellent or water resistant material or materials may form one layer not necessarily the outermost layer.

The tow protector may additionally comprise further straps which may attach the tow protector to fixing points on the underside of the caravan for added security in fixing.

Suitably, the main body **2** of the tow protector may comprise pockets **15** (e.g. two pockets shown in Figure 1) to house lights (e.g. LEDs). The pocket **15** may be formed from a transparent material adapted to receive the lights with a closable opening in the main body material providing access to the lights.

Additionally, or alternatively the tow protector may be sold as a kit comprising the two protector and one ore more additional materials (e.g. a Velcro framed transparent material and/or a ring for preventing fraying of the material once an aperture is made which corresponds to the positioning of the lights) which enable apertures to be made in the tow protector for lights on the caravan to be seen

Figure 2 shows a cross-section of a flap **7** of the two protector of Figure 1. The flap comprises material of the main body **2** sandwiched between reflective tape **9** and soft Velcro **10.** The soft Velcro may stick to the material of the main body **2** at any point along so that the main body may be folded along its length to short the width of the tow protector. For example, the material of the main body may comprise one or more layers of non-woven propylene. Furthermore, one end point of the adjustable strap **7** is sewn between the Velcro and the main body material such that the end of the strap **7** is hidden from view for both strengthening and aesthetic purposes.

Figure 3 shows a cross-section of the outer edge **13, 14** of the tow protector of figure 1. As can be seen, this edge comprises a layer of awning tape with the edge of the awning tape forming the outermost edge, such that the edges of the tow protector can readily be slid into the awning channels of a caravan. The other end points of the adjustable strap(s) may be sewn between the awning tape and main body fabric for strengthening and aesthetic purposes.

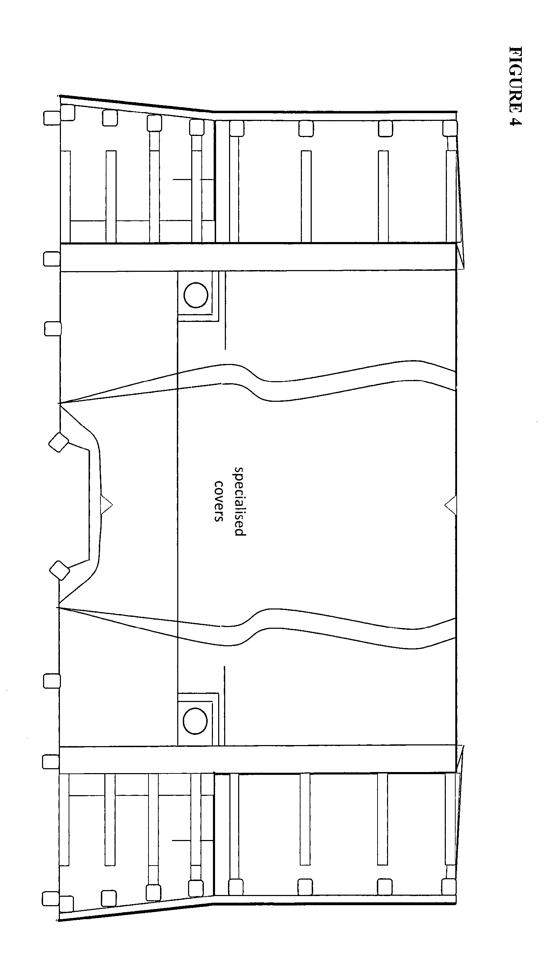

Figure 4 shows a tow protector in accordance with the present invention laid flat.

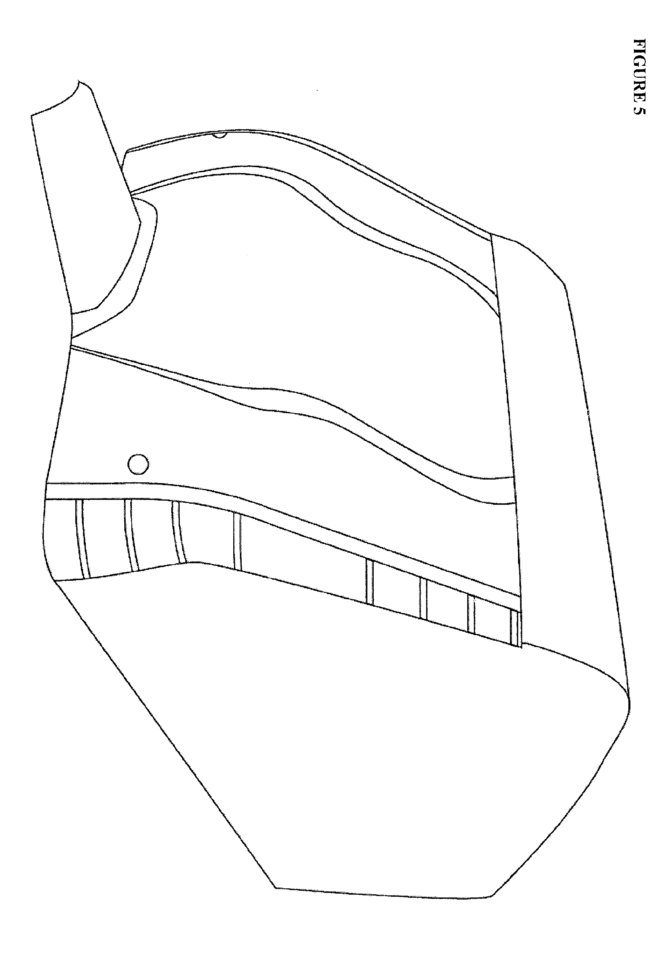

Figure 5 shows the tow protector in accordance with Figure 1 erected on one type of caravan. As can be seen, the tow protector has been adjusted such that the tow protector lies flush against the contours of the caravan and fits snugly against the A-frame.

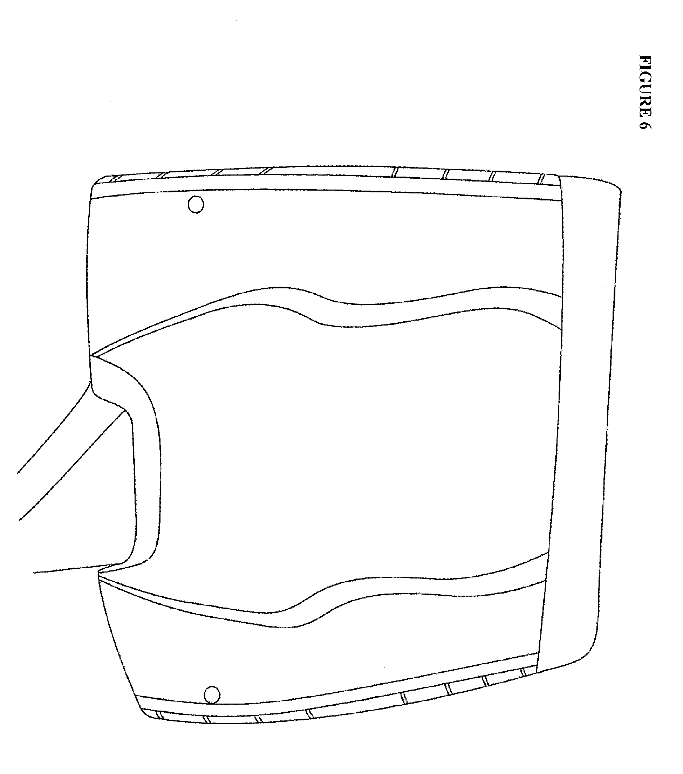

Figure 6 shows the tow protector in accordance with Figure 1 erected on a different type of caravan to that shown in Figure 1. A comparison between Figures 5 and 6 reveals that the caravan of Figure 6 is generally wider and is particularly wider at the bottom requiring the tow protector to adapt to more tapered shape. However, as can be seen, the tow protector readily adapts to the difference in shape.

Thus the present invention provides an integral one-piece tow protector which can be used for various types of caravans.

## Claims

1. An integral one-piece tow protector for a caravan, wherein said tow protector is adjustable to fit more than one make of caravan and wherein said tow protector is formed from a material or materials which protect the caravan from debris during travel.

2. The integral one-piece tow protector of claim 1, wherein the tow protector comprises a main body and two wings, each wing integral with the main body along the wing's outermost side; wherein one or more of the other sides which define the wing forming a closeable slit with the main body to provide adjustment means about the lower portion of the tow protector.

3. The integral one-piece tow protector of claim 1 or claim 2, wherein the tow-protector comprises means to secure one or more vertical folds in the main body to provide means for adjustment in width.

4. The integral one-piece tow protector of claim 3, wherein the tow protector has one or more vertical flaps which extend along the length of the tow protector.

5. The integral one-piece tow protector of claim 3 or claim 4, wherein each of the flap(s) has a plurality of adjustable straps along the length of the flap, which in use connect with the outermost sides of the tow protector to provide a means of securing the tow protector at a desired width.

6. The integral one-piece tow protector according to any one of the preceding claims wherein the integral one-piece tow protector comprises one or more reflective strips.

7. The integral one-piece tow protector according to claims 4 tor claim 5 wherein the visible side of the flap(s) in use forms a reflective strip and/or wherein a portion or all of underside of the flap(s) in use comprises velcro.

8. The integral one-piece tow protector according to any of the preceding claims wherein the outermost sides of the tow protector comprises awning tape.

9. The integral one-piece tow protector according to any of the preceding claims wherein the tow protector comprises a stretchable fabric approximately midway along the bottom edge to allow flexibility about the A-frame of a caravan in use.

10. The integral one-piece tow protector of any one of the preceding claims, wherein at least a portion of the underside of the main body of the tow-protector has a surface comprising a fleece material and/or wherein at least a portion of the outerside of the main body of the tow-protector has a surface comprising a water repellent or water resistant material.

11. The integral one-piece tow protector of any one of the preceding claims, wherein the main body of the tow protector has two pockets to contain lights and/or wherein the tow-protector contains one or more apertures.

12. An integral one-piece tow protector in accordance with claim 1 as substantially herein described.

13. A caravan comprising an integral one-piece tow protector in accordance with any one of the preceding claims.

14. A method of erecting an integral one-piece tow protector in accordance with any one of claims 1 to 12; said method comprising:
sliding the side edges of the two-protector into the awning channel and
tightening the tow protector.

15. A method according to claim 14 as substantially herein described.
